# EUROPEAN PATENT APPLICATION

(11) **EP 1 293 937 A1**
(43) Date of publication of application: **19.03.2003**
(21) Application number: 01203515.0
(22) Date of filing: 17.09.2001
(51) Int. Cl.: G07C 5/00, G01S 5/00

(54) **Service mediator system for vehicles and vehicle passengers in a traffic network**

(71) Applicant: Koninklijke KPN N.V., 9726 AE Groningen (NL)
(72) Inventor: Van Den Berg, Wim, 2831 VR Gouderak (NL)
(74) Representative: Wuyts, Koenraad Maria

(57) **Abstract**

System for controlling vehicles in a traffic network. The vehicles (4) comprise communication means (5), for communication, via a communication network (2), with a service mediator system (1), linking the vehicle's communication means to various servers (9a...i). The vehicle may comprise means (6) for exchanging data between the vehicles' software or hardware, while at least one of said servers comprise means for processing said data related to the vehicles' software or hardware, like fuel consumption and the vehicles' maintenance state. The vehicle's communication means may comprise location means, enabled for exchanging data relative to the vehicles' location to be used for planning and scheduling the use of the vehicles, route planning, billing vehicle related tax or insurance. One or more servers may be enabled to process requests for vehicle parking or for hiring alternative transportation room or means. One server may be enabled for automatic processing vehicle accidents.

## Description

### FIELD OF THE INVENTION

The present invention relates to a service mediator system intended for service provisioning to vehicles and vehicle passengers in a traffic network.

### BACKGROUND OF THE INVENTION

Car traffic nowadays is subject to increasing society concern due to problems such as environment polution and traffic congestion. Suggested and implemented measures comprise tax and technological measures.

### SUMMARY OF THE INVENTION

It is an aim of the present invention to provide a framework for enhanced allocation and mutual tuning of different mobility resources like public and private transportation services, road and parking capacity, traffic routing, route information, and accounting and billing. One of the aspects of the present invention is that all participating vehicles comprise local communication means, enabled to communicate, via a communication network, with a service mediator system, enabled to link said local communication means to various servers.

In an embodiment of the invention, each vehicle contains a "car box" which is enabled to communicate -via mobile communication protocols such as GSM, GPRS or UMTS- with a central or distributed mediator system. Said mediator system serves as a central connection point for all kinds of services -enabled by various servers- relevant for traffic control, vehicle control and for user services like maintenance, accounting and billing of taxes, insurance fees etc, and for (business and private) communications.

The local communication means (the "car box") may comprise means for exchanging data between the vehicles' software or hardware, while at least one of said servers comprise means for processing said data related to the vehicles' software or hardware. For instance one of said servers may register the vehicles' fuel consumption and advise the car driver about the distance and the way to a fuel pump. More sophisticated may be the option that one of said servers comprise means for registering the vehicles' maintenance state and notifying the driver to visit a maintenance or repair workshop. More options in the domain of monitoring the hardware or software of vehicles are possible.

The local communication means may also comprise vehicle location means, enabled for exchanging data relative to the vehicles' location, while at least one of said servers comprise means for processing said location data. This also is a domain which opens many sophisticated services, for instance based on registering, in one of said servers, the vehicles' locations.

At least one of said servers may comprise means for planning and scheduling the use of the vehicles. This option may for instance enable sophicated "just-in-time" car leasing (instead of present permanent car leasing practice).

At least one of said servers may comprise means for dynamic (self-adapting to changes in traffic streams and capacity fluctuations) route planning.

At least one of said servers may comprise means for sophisticated billing or taxing for the use of the vehicles, for instance dependent on vehicle (engine) characteristics, fuel consumption, location, speed, time-of-the-day, etc. At least one of said servers may comprise means for billing vehicle related insurance.

Said local communication means may comprise means for the exchange of voice or data between the vehicles' passengers, while at least one of said servers comprise means for processing said voice or data from and to the vehicles' passengers. This option enables professional or private communication between the vehicles' passengers mutually and with the rest of the world.

At least one of said servers may be enabled to process requests for vehicle parking.

At least part of the vehicles (busses etc.) may belong to a public transportation system; information about said transportation system may be exchanged with passengers of vehicles not belonging to the public transportation system. This option enables gearing of the private vehicles to the public transportation system.

At least one of said servers may be enabled to process orders from the vehicles' passengers referring to hiring transportation room or transportation means.

At least one of said servers may be enabled for automatic processing vehicle accidents, enabling sophisticated dynamic planning of rescue capacity etc.

### EXEMPLARY EMBODIMENTS

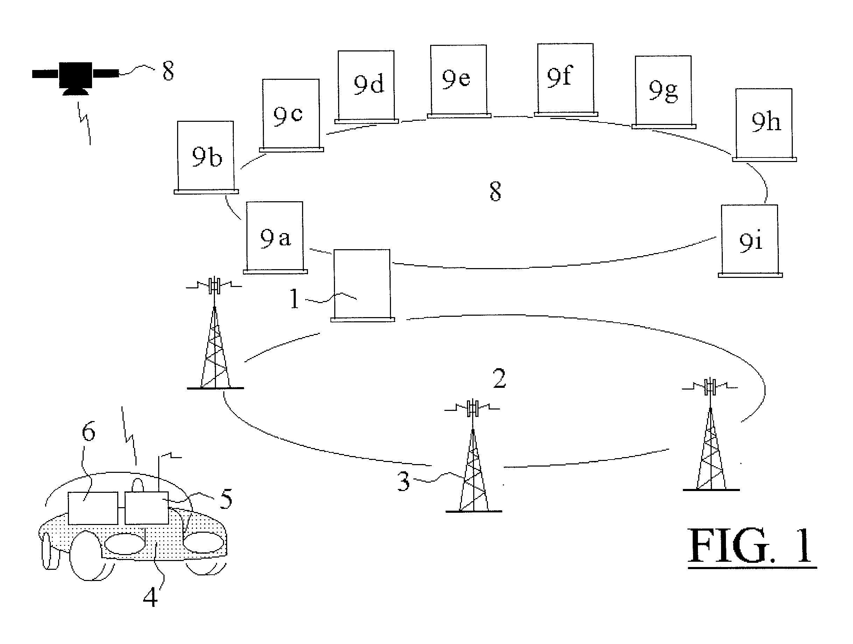

Figure 1 shows a schematic exemplary embodiment of the present invention. Kernel of the embodiment shown is a mediator 1 which is -at one side- connected to a communication system 2, comprising base stations 3, thus being able to exchange data or voice with a vehicle 4, via a vehicle's communication module 5 ("car box"), which is enabled to communicate with the car's passengers by means of an interface not shown or, via a vehicle control system 6, with the vehicle's hardware -the engine etc., via sensors and actuators- or control software. Communication module 5 may also be able to communicate with a satellite 7 for communication or localisation purposes.
Mediator 1 is -at the other side- via an (IP-based) computer network (internet) 8 connected to several traffic or vehicle related servers 9a...d.
Each vehicle 4 is enabled by module 5 to communicate via the communication system 2 -GSM, GPRS, UMTS- if desired via the internet-with mediator system 1. Mediator 1 serves as a central connection point for all kinds of services -enabled by various servers 9a...d-relevant for traffic control, vehicle control and maintenance, accounting and billing related to the usage of the vehicles (taxes, insurance fees), as well as business and private communications.
The local communication module 5 (the "car box") comprises means for exchanging -via the vehicle control system 6- data between the vehicles' software or hardware and server 9a, comprising means for processing said data related to the vehicles' software or hardware. For instance server 9a may register the vehicles' fuel consumption and advise the car driver to visit a (preferred) fuel pump. Server 9a may also comprise means for registering the vehicles' maintenance state and notify the driver to visit a (preferred) maintenance or repair workshop. More options in the domain of monitoring the hardware of software of vehicles by server 9a are possible.
Communication module 5 also comprises vehicle location means via the terrestrial system 2 or via the (GPS) satellite 7, enabled for exchanging data relative to the vehicles' location. Server 9b, accessable via mediator 1, comprises means for processing said location data. Server 9b is able to offer various services based on registering the vehicles' location. Server 9b can also supply the vehicle's location to the other servers 9a...d, for instance to server 9a, to be able to present to the car driver about the nearest fuel pump or repair shop.
Server 9c comprises means for planning and scheduling the use of vehicles 4 belonging to a company's car fleet. This option may enable "just-in-time" instead of present permanent car leasing.
Server 9d comprises means for dynamic (self-adapting to changes in traffic streams and capacity fluctuations) route planning.
Servers 9e comprises means for billing or taxing for the use of the vehicles, dependent on the vehicle's (engine) characteristics (via vehicel control system 6), location, speed, etc. via module 5), time-of-the-day, etc. Server 9e may also comprise means for billing vehicle related insurance etc.
The "car box", of course, is enabled for the exchange of voice or data between the vehicles' passengers and server 9f, comprising means for processing said voice or data from and to the vehicles' passengers. This option enables professional or private communication between the vehicles' passengers mutually and with the rest of the world.
Server 9g is enabled to process requests for vehicle parking, in cooperation with location server 9b.
Part of the vehicles 4 may be part of a public transportation system (taxi's, busses etc.). Information about said transportation system may be exchanged with passengers of vehicles not belonging to the public transportation system. This option enables gearing of the private vehicles to the public transportation system. Server 9h is enabled to process orders from the vehicles' passengers referring to hiring transportation capacity in a taxi, bus, underground, train etc. Finally, server 9i is enabled for automatic processing vehicle accidents, enabling sophisticated dynamic planning of rescue capacity etc. For automatic detection of vehicle accidents, server 9i may be triggered by control system 6, for instance when the vehicles "air bags" are actuated.

## Claims

1. A service mediator system being linked to vehicles in a traffic network, via local communication means (5) in said vehicles, enabled to communicate, via a communication network (2), with said service mediator system (1), and said service mediator system being linked to various servers (9a...i).

2. System according to claim 1, **CHARACTERIZED IN that** said vehicles comprise means (6) for exchanging data between the relevant vehicles' software or hardware, while at least one of said servers comprise means for processing said data related to the vehicles' software or hardware.

3. System according to claim 2, **CHARACTERIZED IN that** at least one of said servers comprise means for registering the vehicles' fuel consumption.

4. System according to claim 2, **CHARACTERIZED IN that** at least one of said servers comprise means for registering the vehicles' maintenance state.

5. System according to claim 1, **CHARACTERIZED IN that** said local communication means comprise vehicle location means, enabled for exchanging data relative to the vehicles' location, while at least one of said servers comprise means for processing said location data.

6. System according to claim 2 or 5, **CHARACTERIZED IN that** at least one of said servers comprise means for registering the vehicles' locations.

7. System according to claim 6, **CHARACTERIZED IN that** at least one of said servers comprise means for planning and scheduling the use of the vehicles.

8. System according to claim 6, **CHARACTERIZED IN that** at least one of said servers comprise means for route planning.

9. System according to claim 6, **CHARACTERIZED IN that** at least one of said servers comprise means for billing the use of the vehicles.

10. System according to claim 9, **CHARACTERIZED IN that** at least one of said servers comprise means for billing vehicle related tax.

11. System according to claim 9, **CHARACTERIZED IN that** at least one of said servers comprise means for billing vehicle related insurance.

12. System according to claim 1, **CHARACTERIZED IN that** said local communication means comprise means for the exchange of voice or data between the vehicles' passengers, while at least one of said servers comprise means for processing said voice or data from and to the vehicles' passengers.

13. System according to claim 12, **CHARACTERIZED IN that** at least one of said servers is enabled to process requests for vehicle parking.

14. System according to claim 12, at least part of said vehicles belonging to a public transportation system, **CHARACTERIZED IN that** information about said transportation system are exchanged with passengers of vehicles not belonging to the public transportation system.

15. System according to claim 12, **CHARACTERIZED IN that** at least one of said servers is enabled to process orders from said passengers referring to hiring transportation facilities in said vehicles belonging to the public transportation system.

16. System according to claim 1, 2, 5 or 6, **CHARACTERIZED IN that** at least one of said servers is enabled for automatic processing vehicle accidents.
